# EUROPEAN PATENT APPLICATION

(11) **EP 1 538 554 A2**
(43) Date of publication of application: **08.06.2005**
(21) Application number: 04256915.2
(22) Date of filing: 08.11.2004
(51) Int. Cl.: G06K 19/04

(54) **Tamper resistant data protection security laminates**

(30) Priority: 06.11.2003 GB 0325946
(71) Applicant: Optaglio Limited, Hants SP10 4DU (GB)
(72) Inventor: Drinkwater, John, Greenwich Way Andover Hampshire SP10 4DU (GB); Holloway, Julian, Greenwich Way Andover Hampshire SP10 4DU (GB)
(74) Representative: Gill, David Alan

(57) **Abstract**

The present invention provides for a tamper resistant data protection security laminate structure in the form of a holographic and/or diffractive security laminate, wherein the laminate base film consists of a relatively thin base film of a fragile, frangible material, characterised by having a low internal strength and a tendency to tear or distort under heat or mechanical attack to provide visible damage and destruction of the holographic image and data protection laminate, and wherein the laminate carries a holographic and / or diffractive security image visible for authentication to an observer under normal lighting conditions and wherein remainder of the film is made up of a relatively thick layer of a suitable hard permanent adhesive which under normal room temperature is a solid material characterised such that under high temperature heat attack the permanent adhesive eventually softens and melts but the frangible base material at this point has insufficient internal strength to be self supporting and is visibly damaged upon attempted removal and wherein the thickness of frangible base film lies within the range of 5% to 60% as a proportion of the total laminate thickness.

## Description

The objective of this invention is to provide an improved data protection laminate for the protection of personal and value data by improving the tamper resistant properties of such laminates. These laminates can be heat activated or applied by pressure sensitive adhesives. An objective of this invention is to further upgrade the security of this improved tamper evident heat activated data protection laminate by incorporating a layer within the laminate providing a holographic or diffractive optically variable effect, can further usefully be designed to be damaged upon attempted thermal attack. The main purpose of this invention is to produce improved tamper evident laminates and holographic tamper evident laminates that are heat or pressure sensitive applied.

Clear laminates, either self adhesive or using a heat activated adhesive, are known in use as overlays affixed over sensitive data - to protect that data against wear and alteration or tampering. Often these laminate are combined with printed security features such as fugitive inks and fluorescent and phosphorescent features to increase the security against tamper and fraudulent alteration or counterfeit.

Optically variable diffractive devices such as holograms and optical interference based devices are known in use to prove the authenticity of items of value and to prevent their fraudulent duplication for example for banknotes, plastic cards, value documents such as fiscal stamps, travel documents such as passports and for the authentication of valuable goods as an anti-counterfeit measure.

Heat activated data protection overlays are typically used in the identity field would be for the protection of biometric data on a passport or identity card. The overlays consists of an plastic (PET, OPP) base film or similar coated with a heat activated adhesive such as a polyethylene or other form of heat activated adhesive film and security inks, often designed to migrate into the substrate material upon application. The overlay is laminated over the data to be protected using heat and pressure in order to bond the heat activated adhesive to the substrate. An improvement on this in terms of tamper evidence and anti-counterfeit is to combine the heat activated laminate with a holographic tamper evident label sealed under the laminate designed to delaminate upon tamper whereas conventional laminates of this form tend not to be tamper evident under heat attack or certain solvent attack.

A typical application in the payment card field would be for the protection of value data on a payment card. Typically in this application the card core would be pre-printed with the value data (such as an authentication or PIN number) overlaid by the laminate to protect the data and then a foil or label typically a scratch off foil would be applied to the laminate over the number. Another typical application in the identity card or passport field would be for the protection of personal data against alternation on an identity card or passport. Overlays can consist of an OPP or PET base film or similar coated with a heat activated adhesive to bond to the paper or base film (e.g. teslin, pvc, card) and could include for example security inks. The overlay is laminated over the data to be protected using heat and pressure in order to bond the heat activated adhesive to the substrate. In the payment card field then typically a scratch off ink patch or scratch off label or scratch off holographic foil would be applied to the overlay over the area of the PIN number or other data designed to be revealed by scratching off the soft opaque coating with a finger-nail or similar where in use the user would scratch off the scratch off coating of foil or label to reveal the PIN number. Typical other applications would be for example on lottery tickets for number protection and for protecting secure validation numbers on value cards, such as pre-pay cards or other value cards such as for pre-pay electrical services, internet services or telephone similar where the service is accessed by accessing and then entering into a system a secure PIN number. Scratch off diffractive and holographic hot stamping foil is also used in this type of application with the advantage that the holographic foil is hard to replicate or obtain and therefore protects the number from alteration or prior use and re-sale.

One weakness of conventional heat seal data protection laminates using PET, OPP or a similar fairly robust film as is that with the application of heat the heat seal adhesive can be melted and the laminate peeled away to allow access to the data for reading or alteration of the personal or value data, after which the laminate can be resealed down to hide the fact that the date has been accesses for alteration or reading.

Optically variable diffractive devices such as holograms, synthetic diffractive devices and optical interference devices are also particularly useful in the area of anti-counterfeit and authentication as the optical effects of the OVD are impossible to copy by scanning or colour copying and origination techniques can be used are very difficult to replicate.

Devices based on the principle of optical diffraction are often used for anti-counterfeit and security purposes because they can produce, by the process of optical diffraction, an optically variable image with characteristic features such as depth and parallax (holograms) and movement features and image switches (purely diffraction grating devices and some holographic devices). Such diffractive, optically variable image forming devices are used as anti-counterfeit devices both because their effects are highly recognisable and cannot be duplicated by print technologies, and because specific and difficult to replicate optical and engineering techniques are required for their production.

These diffractive optically variable image forming devices form their effects base on holographic or pure diffraction grating techniques and are often manufactured as embossed surface relief structures as known in the art (e.g. Graham Saxby, Practical Holography Prentice Hall 1988). They are typically applied to documents of value, plastic cards and articles of value to be protected in the form of holographic or diffractive hot stamping foil or holographic or diffractive labelling, often tamper evident, the labelling being constructed usually of a plastic base or of hot stamping foil applied to a paper base using the known method from the printing industry of the technique of hot stamping of decorative foils. For data protection purposes such diffractive materials are usually made transparent or semi transparent using either a high refractive index coating or a demetallised coating (typically created by metallisation and subsequent removal of the metal by a caustic wash or possibly also created by variable pattern metallisation) or in some cases a semi transparent aluminum coating.

These are various forms of pure diffraction grating devices in use as such security devices, examples include US 4568141, which reveals a diffraction optical authenticating element and US 5034003 which reveals another form of optical security device using diffraction gratings. Another form of pure diffraction grating security device can be produced by direct writing by an electron beam and examples are WO 9318419, WO 9504948 and WO 9502200 and high security diffractive devices can be manufactured by direct write electron beam lithography as in WO 03/009225. Teachings on methods of origination useful for dot screen hidden images, for example using electron beam lithography can be found in PCT/GB/2002/003257, useful teachings on methods of recording and replaying covert laser readable features using both laser interference and direct write origination can be found in WO 02/03323 A1, WO 02/02351 A1and WO 02/03109 A1 and useful methods for originating achromatic structures can be found in WO 02/06858 A2 - the teachings of all which are incorporated by reference. Diffractive optical variable image forming device can also produced by holographic methods and are known by their use in security applications for example on credit cards, secure documents and product authentication - examples of such teachings are US 5694229, US 5483363, WO 995903.

Currently various approaches have been used for securing data on product and documents. These include tamper evident security labelling using anti-counterfeit features such as holograms, diffractive devices, or various forms of security print to add an authentication mark to a document of value or an authentication label to the goods each mark containing a difficult to counterfeit public recognition optical security device.

Typically a laminate is used over the data area to be protected - it is known to use clear laminates coated with pressure sensitive adhesives, and it is known to make these laminates of a relatively thick but fragile material to encourage break up of the material upon tamper, although in virtually all cases the application of gentle heat is enough to soften the pressure sensitive adhesive to enable removal of the laminate - typically it is not possible with a pressure sensitive adhesive to make the laminate carrier thin or fragile enough to prevent such removal without compromising either the rigidity of the card or making the laminate so fragile that it cannot be handled during application.

It is also known to use holographic high refractive index coated laminates coated with pressure sensitive adhesives and it is known to make such pressure sensitive holographic laminates tamper evident by introducing a weakly bonded layer within the structure such that under removal the laminate differentially tears at the holographic interface to give a characteristic pattern and to break up the structure or by using a robust pressure sensitive adhesive and relatively weak card base such that upon attempted tamper to remove and for example read date underneath a scratch off label the base stock and print de-laminates to evidence tamper. However, again the application of sufficient heat to melt the pressure sensitive adhesive is enough to enable the laminate to be peeled away.

It is also known to use laminates coated with heat activated adhesives to form a more permanent and irremovable bond - such laminates are often used as the outer cover of data carrying cards such as prepay value cards or ID cards or paper based ID or value documents such as passport. Such heat activated laminates usually consist of a permanent relatively robust carrier (OPP PET typically say 25 -125 um thickness design to carry the web through the process and provide rigidity and a hard outer scratch proof surface, coated with typically a polyethylene layer typically 10 - 200 um thick designed to heat seal to the substrate material at generally a temperature in excess of 100 deg C. Occasionally such PE adhesive layers can be replaced by other heat seal polymers deposited by water or solvent based processes though typically such materials would have a thinner coating of typically 5 um to 30 um for practical cases.

This new security device thus provides an improved tamper resistant on the previous devices in various ways as detailed herein.

In a first aspect of this invention a new data protection security laminate is revealed as new tamper resistant holographic transparent heat activated tamper resistant laminate, where the laminate base film consists of a very thin base film of a fragile, frangible material (characterised by having a low internal strength and a tendency to tear or distort under heat or mechanical attack to provide visible damage and destruction of the data protection laminate) and also carries a holographic / diffractive security image in order to carry a diffractive security image as an authentication feature and remainder of the film is made up of a thick layer of a suitable heat activated adhesive which under normal room temperature is a solid material - an optimal material is a polyethylene extrusion of a typical thickness 100 micron (thickness in the range 25 to 150 micron ) or a heat seal adhesive such as an acrylic or eva - the thickness is envisaged to vary between approx 15 um and 250 micron depending on the desired final laminate thickness.

This invention describes a tamper resistant data protection security laminate in the form of a holographic and/or diffractive security laminate, wherein the laminate base film consists of a relatively thin base film of a fragile, frangible material, characterised by having a low internal strength and a tendency to tear or distort under heat or mechanical attack to provide visible damage and destruction of the holographic image and data protection laminate, and wherein the laminate carries a holographic and / or diffractive security image visible for authentication to an observer under normal lighting conditions and wherein remainder of the film is made up of a relatively thick layer of a suitable hard permanent adhesive which under normal room temperature is a solid material characterised such that under high temperature heat attack the permanent adhesive eventually softens and melts but the frangible base material at this point has insufficient internal strength to be self supporting and is visibly damaged upon attempted removal and wherein the thickness of frangible base film lies within the range of 5% to 70% , and preferably in the range of 5% to 60% as a proportion of the total laminate thickness.. In certain embodiments the adhesive can be a heat activated adhesive material being one of a polyethylene extruded coating, or a water borne or solvent borne or hot melt a heat seal adhesive coating, of a thickness in the range 25 to 175 micron, characterised that the heat activated adhesive material is solid at normal room temperature and softens and flows at a temperature in the range 70 to 170 degree Celsius.

In different aspects of this invention the thin frangible laminate carries the holographic image directly in its surface either as a direct emboss into the thin frangible material or as an emboss lacquer on the surface of the frangible material, in another aspect of this invention the holographic image is provided separately as a specialised tamper evident label applied to the heat seal surface.

In another aspect of this invention the laminate is envisaged as a pressure sensitive laminate rather than a heat seal laminate, and in another aspect of this invention related to the way a pressure sensitive laminate may be chemically altered after application in order to provide either a fully permanent bond or a bond with a higher degree of thermal resistance under attack. So in one aspect the adhesive upon application to the data to be protected can be a pressure sensitive adhesive that after application to the data undergoes a chemical change to becomes harder and more heat resistant. One way of achieving this is where the chemical change in the adhesive is caused by a cross linking reaction triggered by the application of heat during and / or after lamination to the data carrier. Another possible way of achieving this is where the chemical change in the adhesive is caused by a cross linking reaction caused by the mixing of a second chemical with the adhesive, the second chemical being carried in micro encapsulated particles which are fractured during the heat and pressure of the lamination process, further characterised in that during storage prior to application the second chemical does not mix with the adhesive and is carried in micro encapsulated particles of a size range range 2 to 20 microns.

In one aspect of this invention a new tamper resistant semi transparent holographic heat activated tamper resistant laminate is revealed, where the laminate base film consists of a very thin base film of a fragile, frangible material characterised by having a low internal strength and tendency to tear from a damaged point. This thin fragile film also carries an embossed surface relief structure and is also coated with a high refractive index or partially metallised semi transparent reflector such that after coating a semi transparent optically variable image, typically a diffractive image, though this image could replay thin film interference effects, is visible to an observer to authenticate the laminate.

A very suitable frangible material for this comes from the family of cellulose acetate or cellulose diacetate or other similar thin frangible films such as filled vinyls. A particularly suitable grade of such film is a clear cellulose acetate film of a base thickness around 10-25 um (envisage base film thickness between 6 and 36 um for these devices, but optimal 12 - 125 um - for the thicker films it is envisaged part die cutting through the top carrier film after application to encourage beak up after application upon attempted heat tamper).

The tamper evident laminate also carries a holographic / diffractive security image in order to carry a diffractive security image as an authentication feature and to prevent counterfeit of cards or documents by colour copying or scanning and to prevent replacement of the damaged laminate by another structure. Typically the thin frangible carrier layer in the laminates in the first set of aspects of this invention would also carry an embossed diffractive surface relief structure such as a hologram or other diffractive device and would be further coated with a glass high refractive index material such as zinc sulphide or a similar material or a multi layer coating of such materials or with a demetallised or partially dot metallised aluminium reflector to provide a semi transparent reflector such that the overlay both replays a visual diffractive optically variable image but is also transparent enough to allow visualisation of print and underlying data.

In another aspect of the invention the holographic layer can be provided as a separate thin tamper evident label applied to the surface of the heat seal material - one side coated with a pressure sensitive adhesive and the other side coated with a heat activated adhesive to adhere to the data carrying surface. Under heat attack, when the heat seal adhesive holding the laminate melts the tamper evident release layer of the TE label activates leaving a very thin (few micron) holographic layer adhered to the data to be protected.

By the term diffractive surface relief structure we mean an embossed holographic or diffractive structure as known in the art where the surface relief pattern is embossed into a substrate or embossing lacquer typically to form a laminate, label, hot foil or other form of diffractive device. Usually such surface relief structures are vacuum coated with a metal such as aluminium to provide an efficient reflector an to enhance the effect, but within the scope of this invention for date protection overlays we anticipate the use of different materials to provide transparent or semitransparent reflectors, materials such as substantially transparent coatings with for example inorganic layer such as zinc sulphide or titanium dioxide or similar or the use of partial demetallisation to provide partial transmission using for example dot demetallisation or line demetallisation using alkali attack on the metal or partial metallisation to form a patterned reflector or a low density of metal to maintain semi transparency using for example low optical density of aluminium. The semi-transparent coating is typically formed by the embossed interface carrying a coating of a semi- transparent high refractive index layer consisting of a continuous or intermittent coating of one of zinc sulphide, titanium dioxide or a mixture between the two materials, or the semi transparent coating is formed from a thin semi transparent aluminium layer (O.D 0.4 or less) or the semi transparent coating is formed from a partial coverage of discrete areas of aluminium obtained by selective area metallisation or selective demetallisation, the semi- transparent coating serving to render the diffractive pattern visible and the laminate semi transparent. In some cases some or all or the holographic area may be fully metallsied and opaque. In one aspect the frangible material can carry the holographic image on the outermost surface and in a further alternative further characterised that the holographic image can be removed by scratching to reveal the underlying data being protected.

Generally the bulk of the laminate thickness is made up of a thick layer of a suitable heat activated adhesive - an optimal material is a polyethylene extrusion of a typical thickness 100 micron - the thickness is envisaged to vary between approx 15 um and 250 micron depending on the desired final laminate thickness. It is also possible to use alternative heat activated polymers and adhesive as opposed to PE and these systems are also covered in this invention.

A preferred type of laminate would consist of a thin 10-15 um cellulose diacetate fragile carrier base film extrusion coated with a thick layer of PE, typically of a thickness 30 um to 175 um to provide a thick laminate with the bulk of the material made up of PE, though the layer thickness can vary from these boundaries. This material will be more robust and easier to handle after coating than the fragile base film and would be laminated under heat and pressure to a data carrier - consisting of paper, cardboard, synthetic paper or a plastic such as pvc or similar. The softening temperature of a PE used would typically be 80-100 deg C and the surface temperature on lamination would typically be 105 deg C plus.

In one alternative embodiment a more rigid temporary plastic or paper carrier is adhered to the top surface of the laminate to keep the laminate flat during application into a booklet such as a passport or ID book for example, which is adhered with a weak adhesive that can then be peeled away after application.

In normal usage the laminate would be well bonded to the substrate and impervious to removal by the insertion of a thin blade - although of course a thinner PE coating provides better tamper resistant in this respect and where a large thickness is not required. Under heat attack, however, usually conventional heat laminates using a thicker robust OPP or PET base film fail under say hot plate heat attack, where the material is heated to above the softening point or melting of the PE or heat activated adhesive which then loses bond strength to the substrate allowing the top film of the laminate to be peeled off intake to reveal the data for reads or alteration and typically such base films are robust enough to allow relamination of the laminate without evidence of tamper and in the case of prepay cards without disturbing the scratch foil or ink concealing the data.

However, in the case of this new form of laminate base on a fragile thin cellulose diacetate or similar base film, under hot plate heat attack when the PE or heat activated adhesive melts, the residual base film is designed to be so thin and fragile that it cannot be removed intact and either breaks or more typically distorts. This tearing or distortion of the fragile base film means that the laminate is damaged by removal and cannot be replaced without clear degradation and also makes it prohibitively difficult to re-use the scratch off foil, ideally holographic, as this is destroyed or visually degraded by the attack. This therefore makes the laminate proof to cold attack, where the PE or heat activated adhesive is solid and cannot be removed by a blade insertion, and also proof to hot attack where the majority of the laminate being PE simply melts and the carrier film left is so fragile is it destroyed or irreversibly distorted and destroyed during the tamper attack. Cellulose acetate and cellulose diacetate is further a very advantageous material to use for the base film as the material softens at approximately 125 deg C such that if a high temperature heat attack is used where the PE has lost all bond strength then the acetate will be close to melting and will this stretch and distort or break upon removal. Another suitable material would be a frangible vinyl or thin vinyl film.

This invention also relates and applies to the use of alternative fragile carrier substrates with low film strength and a lowish softening point somewhat above that of PE - we envisage vinyls and vinyls filled with filler material to render them more fragile for example.

A preferred type of laminate would consist of a thin 10-25 um cellulose diacetate fragile embossed and zinc sulphide coated to give a semi transparent holographic image, or the same film coated with an embossing lacquer which is then embossed and similar vacuum coated with a high refractive index film or a number of high refractive index films to provide an additional optically variable effect. This film will form a diffractive image carrying semi-transparent carrier base film which is then preferably extrusion coated with a thick layer of Polyethylene, typically of a thickness 40 um to 175 um to provide a thick laminate with the bulk of the material made up of PE, though the layer thickness can vary from these boundaries. This material will be more robust and easier to handle after coating than the fragile base film and would be laminated under heat and pressure to a card base - consisting of paper, cardboard, synthetic paper or a plastic such as pvc or similar. The softening temperature of a PE used would typically be 80-100 deg C and the surface temperature on lamination would typically be 105 deg C plus.

In normal usage the holographic or diffractive laminate would be transparent to visualise print but would also replay a diffractive image for authentication and would physically be well bonded to the substrate and impervious to mechanical removal - although of course a thinner PE coating provides better tamper resistant in this respect and where a large thickness is not required.

In another embodiment of this invention the laminate is made with a novel pressure sensitive adhesive revealed herein designed to harden up after application under heat and pressure via chemical reaction triggered either by the application of heat or by the use of a two component adhesive where one of the components is delivered held as micro encapsulated material in the body of the adhesive, for instance typically using the sort of micro-encapsulation technology used, to encapsulate fragrances for scratch and sniff inks. In this aspect the second adhesive component is delivered into the adhesive mixture encapsulated in particles of typically size in the range 2 to 10 micron size which under heat and pressure during application onto the document or card are ruptured to allow the second adhesive component to mix and generate a chemical reaction to harden the adhesive to make a permanent bond with improved resistance to thermal attack and chemical attack.

Under heat attack of this new form of laminate base on a fragile thin cellulose diacetate or similar base film carrying a holographic or diffractive image embossed into the base film and coated with a high refractive index reflector (or carrying a thermoplastic lacquer coated onto the film and then embossed), under hot plate heat attack when the PE or heat activated adhesive melts, the residual base film is designed to be so thin and fragile that it cannot be removed intact and either breaks or more typically distorts. This tearing or distortion of the fragile base film means that the laminate is damaged by removal and cannot be replaced without clear degradation and also makes it prohibitively difficult to re-use the scratch off foil, ideally holographic, as this is destroyed or visually degraded by the attack. This therefore makes the laminate proof to cold attack, where the PE or heat activated adhesive is solid and cannot be removed by a blade insertion, and also proof to hot attack where the majority of the laminate being PE simply melts and the carrier film left is so fragile is it destroyed or irreversibly distorted and destroyed during the tamper attack. Cellulose actetate and cellulose diacetate is further a very advantageous material to use for the base film as the material softens at approximately 125 deg C such that if a high temperature heat attack is used where the PE has lost all bond strength then the acetate will be close to melting and will this stretch and distort or break upon removal. Another suitable material would be a frangible vinyl or thin vinyl film.

In a further aspect of this invention the heat applied laminate can be increased in tamper evidence by partially die cutting through the base material to weaken it. So for example an advantageous place to do this would be at the stage of laminate manufacture after PE coating or possible after lamination to the card. It is only required to cut through or partially cut through the thin carrier film - this will not degrade the cold strength of the laminate sufficiently which is provided by the PE coating but will massively degrade the strength of the exposed carrier film under heat attack and would make this film discontinuous and prone to break up

This invention also envisages using in this first aspect of a tamper evident heat activated laminate a thicker cellulose acetate or diacetate base material ore frangible vinyl (say for example 25 + -or 36 or 50um) which would give a card or document more rigidity and betterwear resistance by using a set of kiss cuts to penetrate partially or fully through the carrier film leaving the cold strength to be provided by the PE but allowing the base film to be very fragile and break up on tamper. This invention also envisages the of a tamper evident heat activated laminate a thin but non frangible base material (say for example 6 um to 12 um OPP film or PET film) which would be easier to handle during coating and then using a set of kiss cuts as above to penetrate substantially or fully through the carrier film leaving the cold strength to be provided by the PE but allowing the base film to be very fragile as it has been mostly cut through and so would and break up on attempted heat based tamper.

In another aspect a heat activated diffractive laminate that is tamper evident is such that under excess temperature, where the PE or heat activated would become molten and the carrier easier to remove, the embossing lacquer has become soft so destroying the holographic image. This further protects against tamper in a very effective way guarding against delamination to read or alter data and subsequent relamination and misuse.

This invention also envisages using in this first aspect of a tamper evident diffractive heat activated laminate a thicker cellulose acetate or diacetate base material ore frangible vinyl (say for example 25 + -or 36 or 50um) which would give a card or document more rigidity and better wear resistance by using a set of kiss cuts to penetrate partially or fully through the carrier film leaving the cold strength to be provided by the PE but allowing the base film to be very fragile and break up on tamper.

In a further aspect an alternative tamper evident method of protection against heat attack of the laminate is also envisaged by using a permanent thermochromic ink or other material that irreversibly changes colour upon heating near the softening point of the PE or heat activated adhesive.

Another useful aspect of this invention provides in any of the above aspects for any of the layers to be doped with a material to fluoresce under UV light or luminescence under Infra Red light provide for a non visible material that can provide an additional excited detectable feature which optionally could be patterned (e.g. printed) to additionally provide a message or a machine readable message (such as a magnetic coating) for additional authentication. In particular the PE coating or heat activated adhesive can be doped with taggant during the coating stage to render the film unique.

Note that typically the holographic image would be HRI coated and protected on the underside of the film but that for some very low cost one usage applications the diffractive image could be embossed into the top surface of the film and potentially left uncoated to use the reflectivity of the air substrate interface and that this approach is also claimed as an aspect of the invention.

In another aspect of this invention we refer to a method of improving the protection of a laminate based on a pressure sensitive adhesive from heat attack using a label or laminate substrate that shrinks or distorts under heat attack beyond reuse. By replacing the frangible material for the laminate base with a shrinkable material. This technique uses a diffractive thin base material typically say 12um OPP with an emboss lacquer, diffractive image and coated with HRI laminated to (using either a pressure sensitive adhesive or curable laminating adhesive or suitable heat activated adhesive) a thicker substrate material is orientated PVC (poly vinyl chloride) designed to shrink in one direction on the application of heat (as used in the manufacture of shrink sleeve materials). In another embodiment the PVC could be directly embossed. The underside of one of the materials will be coated with an aggressive pressure sensitive adhesive and laminated to a card. This aspect of the invention could also be delivered as a tamper evident scratch off label - for example where the hologram was fully metallised and contained a scratch off layer. The structure will resist cold blade attempts at delamination due to the aggressive pressure sensitive adhesive. Under mild heat attack to soften the pressure sensitive adhesive the orientated PVC will shrink violently thus distorting the card and hologram to render the card and hologram impossible to re-use and to clearly evidenced tamper.

Throughout this invention we refer to diffractive optical structures as being the preferred optical security device but also include invention to cover alternative forms of optical security devices operating on the known principles of optical thin film interference effects consisting of either a stack of dielectric layers or a combination of metal layers and dielectric spacer layers or optical security devices depending on the volume principles of reflection holography such as dichromated gelatin and photopolymer type devices. By the term diffractive structure we refer to the surface relief structure of this device which generates its diffracted image by a process of diffraction of light and is typically manufactured by a holographic or direct write process as known in the art.

It is also known to apply optically variable interference effects in the form of printing inks consisting of flakes of the appropriate material, typically by way of screen or gravure printing techniques.
The invention is described further hereinafter, by way of example only, with reference to the accompanying drawings in which:
Figs. 1A and 1B illustrate a cross section through a laminate structure embodying the present invention before, and after, the application of heat;
Figs. 2A and 2B illustrate a cross section through different embodiments of a heat-activated tamper laminate embodying the present invention; and
Figs. 3A and 3B illustrate cross sectional views through a shrink-effect holographic tamper evident laminate embodying the present invention and before, and after, the application of heat.

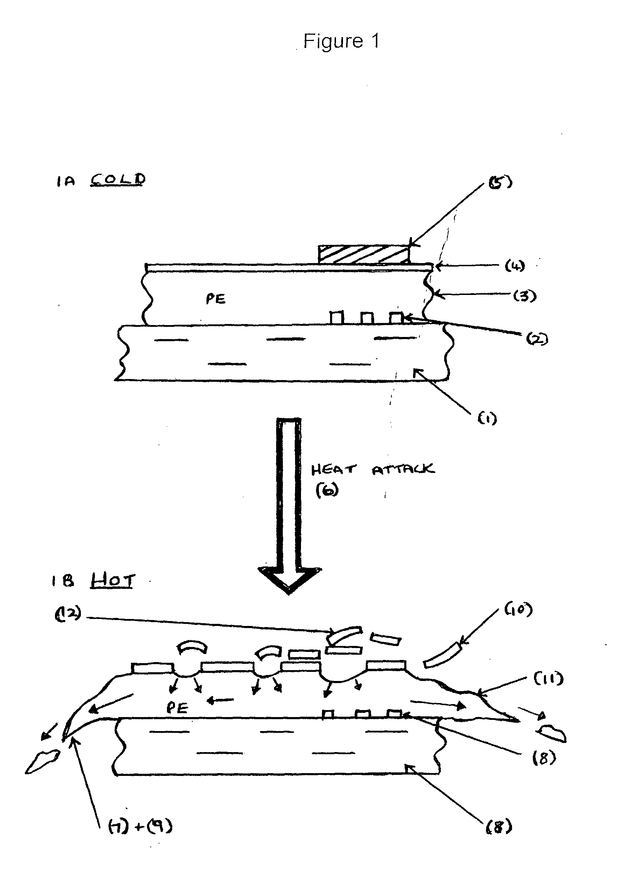

Turning now to the drawings, Fig. 1A shows a heat activated laminate in the cold normal use state consisting of a thin cellulose diacetate film 4 of typical thickness 15 micron and a thick heat seal adhesive layer 3 typically 100 to 150 micron attached to a data carrying card or paper 1 containing data such as a PIN to be protected 2. In this case the holographic effect 5 is on top of the laminate and is opaque and is arranged such that the holographic effect may be scratched away by gentle abrasion to reveal the number. In Figure 1B showing a heat attack 6 of the laminate, the heat seal adhesive or PE layer melts 3 under the heat attack but in this case the fragile thin laminate 4 breaks up 10 so that although the data 8 can be read the attempt to tamper is very obvious and the hologram 12 and laminate 10 are irrepairably distorted and damaged to evidence attempted tamper.

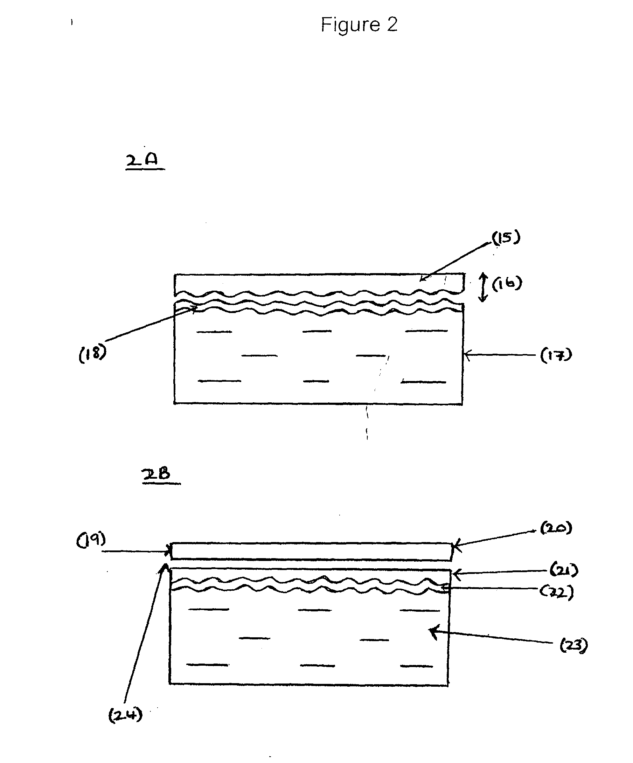

Fig. 2A shows a holographic data protection laminate coated with HRI to provide a transparent holographic overlay consisting of and embossed structure in the laminate film 14, a frangible film as the laminate typically cellulose diacetate 15 of gauge typically 14-25 micron, and a transparent reflector of zinc sulphide (18) coated with a thick layer of heat activated adhesive or PE 17. Figure 2B shows an alternative holographic data protection laminate coated with HRI to provide a transparent holographic overlay consisting of and embossed coating of emboss lacquer 21 coated on a thin laminate film 20, a frangible film 19 comprising the laminate typically cellulose diacetate or thin OPP 20 of gauge typically 14-25 micron, and a transparent reflector of zinc sulphide 22 coated with a thick layer of heat activated adhesive or PE 23 typically of gauge 100-150 micron. Ideally the cellulose acetate or frangible vinyl or orientated pvc softens and distorts and breaks up just above the melt point of the PE layer so destroying the holographic image and laminate under heat attack.

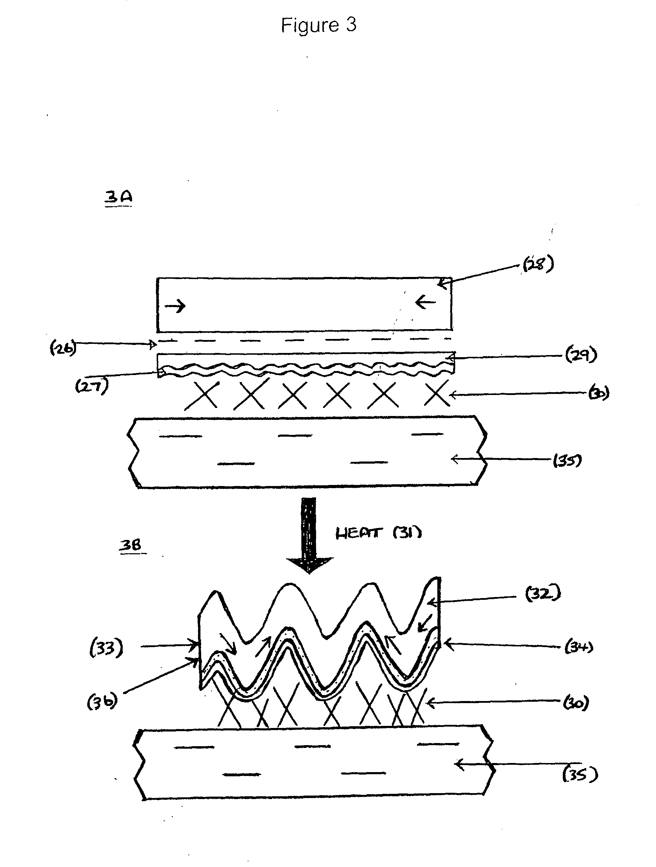

Figs. 3A and 3B show the effect of heat attack on a laminate 26 made of orientated pvc where in this case the holographic layer of thin OPP 29 embossed and coated with ZnS 27 which is laminated to the heat distorting layer 28 on a pressure sensitive adhesive 30 which cross links upon application. After application and under heat attack as shown in Figure 3B the pvc shrinks under heating 31 and 32 so distorting and destroying the holographic layer 34 to render evidence of tamper attempt on the data carrying element 35 and preventing reapplication of the laminate after access or tamper with the data without clear damage to the holographic protection element.

## Claims

1. A tamper resistant data protection security laminate structure in the form of a holographic and/or diffractive security laminate, wherein the laminate base film consists of a relatively thin base film of a fragile, frangible material, **characterised by** having a low internal strength and a tendency to tear or distort under heat or mechanical attack to provide visible damage and destruction of the holographic image and data protection laminate, and wherein the laminate carries a holographic and / or diffractive security image visible for authentication to an observer under normal lighting conditions and wherein remainder of the film is made up of a relatively thick layer of a suitable hard permanent adhesive which under normal room temperature is a solid material **characterised** such that under high temperature heat attack the permanent adhesive eventually softens and melts but the frangible base material at this point has insufficient internal strength to be self supporting and is visibly damaged upon attempted removal and wherein the thickness of frangible base film lies within the range of 5% to 60% as a proportion of the total laminate thickness.

2. A structure as claimed in Claim 1, wherein the adhesive is a heat activated adhesive material being one of a polyethylene extruded coating, or a water borne or solvent borne or hot melt a heat seal adhesive coating, of a thickness in the range 25 to 175 micron, **characterised** that the heat activated adhesive material is solid at normal room temperature and softens and flows at a temperature in the range 70 to 170 degree Celsius.

3. A structure as claimed in Claim 1, wherein the adhesive comprises a pressure sensitive adhesive arranged such that after application to the data undergoes a chemical change to becomes harder and more heat resistant.

4. A structure as claimed in Claim 3, wherein the chemical change in the adhesive is caused by a cross linking reaction triggered by the application of heat during and / or after lamination to the data carrier.

5. A structure as claimed in Claim 3, wherein the chemical change in the adhesive is caused by a cross linking reaction caused by the mixing of a second chemical with the adhesive, the second chemical being carried in micro encapsulated particles which are fractured during the heat and pressure of the lamination process, further **characterised in that** during storage prior to application the second chemical does not mix with the adhesive and is carried in micro encapsulated particles of a size range 2 to 20 microns.

6. A structure as claimed in any one or more of the preceding claims wherein the base frangible material is one of the following: cellulose acetate, or cellulose diacetate, or frangible vinyl, or thin orientated Poly Vinyl Chloride film or a thin OPP film where the OPP film has been weakened by kiss cutting through the film base.

7. A structure as claimed in Claim 6, where the thickness of the frangible base material is in the range of 5 to 35 microns.

8. A structure as claimed in any one or more of the preceding claims where the frangible base material carries the holographic / security surface relief embossed pattern.

9. A structure as claimed in any one or more of the preceding claims where the holographic data protection laminate is semi transparent to permit the viewing of underlying data by an observer.

10. A structure as claimed in Claim 9, wherein the semi-transparent coating is formed by the embossed interface carrying a coating of a semi- transparent high refractive index layer consisting of a continuous or intermittent coating of one of zinc sulphide, titanium dioxide or a mixture between the two materials, or the semi transparent coating is formed from a thin semi transparent aluminium layer (O.D 0.4 or less) or the semi transparent coating is formed from a partial coverage of discrete areas of aluminium obtained by selective area metallisation or selective demetallisation, the semi- transparent coating serving to render the diffractive pattern visible and the laminate semi transparent.

11. A structure as claimed in any one or more of Claims 1 to 7, wherein the security image is additionally or alternatively formed by a thin film interference effect.

12. A structure as claimed in any one or more of Claims 1 to 7, wherein the security range is additionally or alternatively formed by vacuum deposition.

13. A structure as claimed in any one or more of Claims 1 to 7, wherein the security image is additionally or alternatively formed by an optically variable printing ink.

14. A structure as claimed in any one or more of Claims 1 to 8, wherein the embossed face of the frangible material carries an opaque fully metallised diffractive security image over all or part of the area.

15. A structure as claimed in Claim 14, wherein the frangible material carries the holographic image on the outermost surface further **characterised** that the holographic image can be removed by scratching to reveal the underlying data being protected.

16. A structure as claimed in any one or more of Claims 1 to 7, wherein the semi transparent holographic security image is provided as a separate thin tamper evident label applied to the surface of the heat activated adhesive material **characterised** such that one side of the holographic label coated with a pressure sensitive adhesive and the other side coated with a heat activated adhesive to adhere to the data carrying surface, and wherein the label contains a release layer such that under heat application the release layer of the holographic label activates leaving a very thin ( few micron) holographic layer adhered to the data to be protected.

17. A structure as claimed in any one or more of Claims 1 to 12, wherein a plastic or paper carrier is temporarily adhered to the top surface of the laminate to keep the laminate flat during application, and wherein that the temporary carrier is adhered with a weak adhesive that can then be peeled away after application of the laminate.

18. A structure as claimed in any one or more of the preceding claims, wherein the frangible base material of the laminate is partially cut through over all or part of the area to weaken the base material and further promote break up upon attempted tamper, **characterised** such that the main part of the laminate rigidity at room temperature is generated by the adhesive film.

19. A structure as claimed in any one or more of the preceding claims, wherein the laminate is further protected by the application of security print using one or some of the following techniques; transfer inks designed to transfer to the substrate under heat lamination; fluorescent or luminescent inks, thermochromic inks designed to irreversibly changes colour upon heating near the softening point of the adhesive, or solvent sensitive inks designed to change colour or become soluble under attempted solvent attack.
